Europäisches Patentamt

(19) European Patent Office

Office européen des brevets

(11) Publication number: **0 000 087**
**B1**

## (12) EUROPEAN PATENT SPECIFICATION

(45) Date of publication of patent specification: 09.09.81

(21) Application number: 78200039.2

(22) Date of filing: 12.06.78

(51) Int. Cl.³: **C 08 L 67/08, C 09 D 3/64**
**//C08G63/66**

(54) Aqueous air-drying alkyd dispersions and their use.

(30) Priority: 13.06.77 GB 2456277
22.03.78 GB 1137978

(43) Date of publication of application:
20.12.78 Bulletin 78/1

(45) Publication of the grant of the European patent:
09.09.81 Bulletin 81/36

(84) Designated Contracting States:
BE CH DE FR GB LU NL SE

(56) References cited:
DE - A - 2 622 646
FR - A - 1 155 644
FR - A - 1 386 701
FR - A - 2 253 057

(73) Proprietor: UNILEVER NV
Burgemeester 's Jacobplein 1
NL-3000 DK Rotterdam (NL)
(84) BE CH DE FR LU NL SE

(73) Proprietor: UNILEVER LIMITED
Unilever House Blackfriars
London EC4 (GB)
(84) GB

(72) Inventor: Belder, Eimbert Gerrit
Westenholterweg 16
NL-8042 AH Zwolle (NL)
Inventor: Legg, John Charles
Elsbeek 34
NL-8033 BB Zwolle (NL)
Inventor: Van der Linde, Robert
Kuyerhuislaan 10
NL-8024 PD Zwolle (NL)

(74) Representative: Wiesenhaan, Herman, Drs.
Unilever N.V., Patent Division P.O.Box 137
NL-3130 AC Vlaardingen (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 000 087

### Aqueous air-drying alkyd dispersions and their use

This invention relates to aqueous air-drying alkyd dispersions and their use as water-based paints with a gloss finish.

Water-based paints having a gloss finish have been known for some time. Water-dispersibility of the alkyds which constitute the resin of these paints has been conferred generally by including in the alkyd alkylene oxide groups from e.g. polyethylene glycol in an amount of at least 9 weight percent of the alkyd resin.

Most literature references quote a range of 10—30 weight percent of ethylene oxide groups as a requirement for obtaining water-dispersible alkyds. Reference is made to H. Kittel, Lehrbuch der Lacke und Beschichtungen, Bd 1, Teil 3, Seite 911 and German Patent Specification (DE—OS) 26 22 646, page 2, par.2, where a review of patent literature is given.

Certain specifications, such as FR—A 1,386,701 and GB—A 1,044,821 mention — without giving any experimental support — water-dispersible alkyds containing 1% or more of polyglycol, but it is observed that these alkyds show acid values of 40—95 (page 2, left-hand column, lines 3 and 4), preferably between 60 and 75 (lines 5 and 6 from the bottom of said column). If the Examples are reviewed, the following percentages of polyalkylene glycol in the alkyd charges emerge:

| Ex.1 | Ex.2 | Ex.3 | Ex.4 | Ex.5 | Ex.6 | Ex.7 | Ex.8 | Ex.9 |
|------|------|------|------|------|------|------|------|------|
| 11.2% | 10.5% | 11.2% | 11.2% | 11.5% | 11.5% | 11.5% | — | — |

| Ex.10 | Ex.11 | Ex.12 | Ex.13 | Ex.14 | Ex.15 | Ex.16 |
|-------|-------|-------|-------|-------|-------|-------|
| (11.2%) | (11.2%) | (11.2%) | (11.2%) | (11.5%) | (11.5%) | (11.5%) |

Ex.17
11.3% (11.3%)

Brackets indicate examples describing aqueous emulsions containing the alkyd. Apparently there is a clear discrepancy between the percentages of polyalkylene glycol used in the Examples and the 1% mentioned in the specification.

Applicants are therefore of the opinion that this citation is no enabling disclosure for the average expert how to prepare aqueous dispersions of alkyds containing low percentages — below 3% — of ethylene oxide groups.

The carboxyl groups of the alkyds are neutralized with ammonia or amine which contributes greatly to the hydrophilic character. A lower acid value means less ionized or hydrophylic groups. Also — all other things being equal — a lower acid value points to a higher average molecular weight, which again renders it more difficult to obtain a stable aqueous emulsion from the alkyd with the lower acid value.

As to FR—A 1,555,644 it is observed that it discloses alkyds and emulsions thereof containing from 10—20% of polyethylene glycol (cf. page 3, left-hand column. lines 4 and 5), but according to this specification one might deviate from this range. Examples 1 and 2 describe alkyd resins containing 180 parts of polyethylene glycol on a total charge of 2030 parts, developing 130 parts of water i.e. 9.5% and 142 parts on a total charge of 1086 parts, developing 65 parts of water i.e. 13.9% of polyethylene glycol respectively. In Example 2 styrene is also added before emulsifying and is therefore not quite pertinent.

Furthermore, German Patent Application (DE—OS) 22 18 364 = FR—A 2,133,928 is quite clear in pointing out in Example 4 that ester mixtures containing an unsaturated polyester and diallylphthalate containing less than 10% of ethylene oxide blocks could not be emulsified in water so as to yield stable emulsions. It was shown that ethylene oxide percentages below about 10% result in unstable emulsions which separate within 24 hours. Example 4, namely, refers to Example 1, but mentions polyoxyethylene-castor oil containing varying molar ratios of ethylene oxide to castor oil, viz. 0, 10, 20, 50, 100, 150 and 200, corresponding to percentages of 0, 32, 49, 70, 83, 88 and 90.

The amount of polyethylene oxide in the polyester after admixture with diallylphthalate yields the following percentages: 6.7; 8.9; 10.1; 11.5; 12.4; 12.7; 12.8.

The Table on page 10 of the German Specification (original page number and page 5 of the French Specification) is quite revealing as to the stability of the emulsions, as it points out that emulsions with ethylene oxide-castor oil in molar ratios of 0 and 10 could not be emulsified (X-rating). As calculated above, these ester mixtures contain 6.7 and 8.9% of ethylene oxide blocks and the ester mixture containing 10% of ethylene oxide blocks (molar ratio of ethylene oxide to castor oil 20) is stated to destabilize by sedimentation upon 24 hours' storage. Stable emulsions were obtained with molar ratios of 50, 100 and 150, ie. with alkyds clearly containing more than 10% of ethylene oxide.

Consequently, the art points away from stable aqueous alkyd emulsions in which the alkyd contains only a few percents of alkylene oxide and which alkyd has a relatively low acid value and consequently a lower molecular weight.

These amounts (10—30%) of alkylene oxide groups, whilst considered necessary to obtain water dispersibility and a gloss finish, also caused the paints to be soft and have a poor water resistance.

Several attempts have been made to improve the quality of the coating, retaining water dispersibility by reducing the percentage of alkylene oxide.

French Patent Specification FR—A 22 53 057 discloses air-drying alkyd mixtures consisting of a non-emulsifying resin and 6—12% of an emulsifying resin containing 50—70% of polyethylene glycol. Consequently, these air-drying alkyd mixtures contain 3—8.4% of polyethylene glycol. The actual specific disclosure is, however, higher, namely 4%. In Table II there is a specific disclosure of a mixture containing resin A4 and 8% emulsifying resin E5 which contains 50% of polyethylene glycol. Consequently, the specific disclosure goes down to only 4% PEG instead of 3% of polyethylene glycol in an air-drying alkyd, and this relates to a mixture of a non-emulsifying resin with an emulsifying resin.

DE—A 26 22 646 discloses alkyds containing only 2—10% of polyethylene glycol (= ethylene oxide groups) together with 5—30% of pentaerythritol monoformal (PMF) which is incorporated in the resin as such or in the form of paraformaldehyde. To calculate the percentage of methylene oxide groups in the resins, the PMF percentage has to be multiplied by about 0.2. Consequently, DE—A 26 22 646 claims alkyds containing from 3—16% of alkylene oxide groups (2—10% of —$C_2H_4O$— groups and 1—6% of —$CH_2O$— groups). In the Examples the following percentages of alkylene oxide groups are disclosed:

| Ex. | Charge (g) | Water formed (g) (theoretical) | Et O | Me O | % alkylene oxide in resin (A-series) | % alkylene oxide in resin emulsified |
|---|---|---|---|---|---|---|
| A1 | 750 | 23 | 68 | 21 | 12 | 12 |
| A2 | 418 | 18 | 18 | 7 | 6.2 | 6.2 |
| A3 | 161 | 7 | — | 1.6 | 1.0 | 4.7 |
| A4 | 727 | 24 | 22 | 13.2 | 5.0 | 5.0 |
| A5 | 841 | 32 | 28 | 22 | 6.2 | 6.2 |
| A6 | 598 | 23 | — | 8 | 1.4 | 4.3 |

Resins A3 and A6 are, according to page 8, last five lines and page 9, Table 1 of the Specification, first well homogenized with the emulsifying resin E1 or E2 in amounts of 15% and 14% and only then emulsified in water. Emulsifying resins E1 and E2 contain 26% and 22% of alkylene oxide groups respectively.

Although DE—A 26 22 646 specifically discloses an alkyd resin with a percentage of alkylene oxide groups of 1.4 in Example A6, such a resin is emulsified only after incorporating additional alkylene oxide groups by means of emulsifying resin so that the resin mixture emulsified contains 4.3% of alkylene oxide groups. Clearly alkyd resins containing 1.0 (Ex. A3) or 1.4% (Ex. A6) were considered unsuitable for direct emulsification and the incorporation of emulsifying resin was deemed necessary.

However, this Specification does not illustrate the actual emulsification of resins with alkylene oxide percentages below 4.3%, and according to claim 1 alkyds containing at least 2% ethylene oxide together with at least 1% methylene oxide groups, totalling at least 3% of alkylene oxide groups, were deemed necessary for direct emulsification in water.

The present invention provides an aqueous dispersion of an air drying alkyd containing alkylene oxide groups, characterized in that the alkyd contains 1.5—2.75% of alkylene oxide radicals and has an acid value of 5—20 mg KOH/g and a hydroxyl value of 5—125 mg KOH/g, the weight ratio of alkyd to water being from 30:70 to 70:30; in the presence of a nonionic emulsifying agent in an amount of 0.25—5% by weight based on the dispersion; a $C_2$—$C_6$ alcohol in an amount of 0—10% by weight; and a volatile water-soluble base in an amount of 0.05—5% by weight, with the proviso that the pH of the dispersion ranges between 5 and 9.

Dispersions in which the alkyd has an acid value of 7—14 mg KOH/g and a hydroxyl value of 10—75 mg KOH/g are preferred.

By the term alkyd resin is to be understood a polyester product composed of polyhydric alcohols, polybasic acids and monobasic fatty acid (cf. Encyclopedia of Polymer Science and Technology, Vol.1,

0 000 087

page 663, Interscience New York). In the case of air-drying alkyd a substantial amount of the fatty acids are polyunsaturated and usually derived from (semi) drying oils.

Particularly suitable alkyds are based on a drying oil or suitable unsaturated fatty acids, a polyol, an aromatic and/or aliphatic polycarboxylic acid and an alkylene oxide addition product in which
— the semi (drying) oil component or unsaturated fatty acids constitute(s) 45—80, preferably 55—65% by weight of the mixture.
— the polyol component constitutes 10—30, preferably 12—25% by weight of the mixture,
— the polycarboxylic acid component constitutes 10—35, preferably 12—25% by weight of the mixture,
— the alkylene oxide addition product constitutes 1.5—2.75% by weight of the mixture, and the relative amounts of polyol, drying or semi-drying oil and carboxylic acid are chosen in such a way as is usual in the manufacture of (semi) air-drying alkyd resins to be used in solvent-based paints. In view of the prior art discussed above it is surprising that with these low amounts of alkylene oxide addition products water-dispersible alkyds suitable for obtaining glossy paints could be obtained.

The esterification reaction leading to the alkyd resin is conveniently carried out at a temperature of 180—260°C, whilst removing water or any other volatiles of the reaction. The addition to the reaction mixture of an entrainment agent such as xylene for the removal of water by azeotropic distillation is preferred. The reaction is optionally carried out in the presence of a catalyst. Suitable catalysts are e.g. metal oxides, especially of the alkaline earth metals, in quantities of $(1—10) \times 10^{-5}$ of the reaction mixture.

Sometimes it is advantageous to carry out the reaction in two steps, viz. an alcoholysis reaction of the drying oil with the polyol, followed by esterification with the carboxylic acid and alkylene oxide addition product.

As drying oil component any of the drying or semi-drying oils can be used; also fatty acids derived therefrom and other suitable unsaturated fatty acids, such as tall oil fatty acids, can be used. Suitable oils are e.g. linseed oil, soyabean oil, perilla oil, safflower oil and dehydrated castor oil. Modified (semi) drying oils such as e.g. styrenated oils can also be used. Suitable styrenated alkyds can also be prepared by the addition of styrene to the alkyd at 140—160°C for a period of several hours until a suitable viscosity has been reached. Analogously isocyanate-modified alkyds can be prepared.

As polyol any alcohol having 2—6 hydroxyl groups and 3—10 carbon atoms can be used. In general at least 50% of the polyol should contain at least 3 hydroxyl groups in the molecule. Suitable alcohols are e.g. glycol, glycerol, trimethylol alkanes containing 1—3 carbon atoms in the alkane group, pentaerythritol, etc. These alcohols may also contain a smaller amount of higher oligomeric forms, such as e.g. dipentaerythritol.

As polycarboxylic acid any acid containing 2—4 carboxyl groups and 3—9 carbon atoms in the molecule can be used. These acids may be aliphatic, aromatic or cycloaliphatic. Dicarboxylic acids are generally preferred as the major acid constituent. Suitable acids are the phthalic acids, maleic acids, fumaric acid, azelaic acid, sebacic acid, trimellitic acid, pyromellitic acid etc.

As polyalkylene oxide compound any compound having the structure of a number of $C_2—C_4$ alkylene oxide units attached to a $C_1—C_6$ mono- or poly-hydroxy compound can be used, including the addition products of partial ethers of polyhydroxy compounds.

The average molecular weight of the alkylene oxide addition product, which preferably is an ethylene oxide addition product, in particular polyethylene glycol, should range from 200 to 6,000, preferably from 1000 to 3000. Polyethylene glycol is a preferred compound. Certain ethylene oxide addition products are sold under the trade-name of Carbowax (ex. Union Carbide Co.).

The novel alkyd resins obtained upon esterification of the above components are yellow-brown semi-solid resins usually having a Gardner colour of 4—8, and can be worked into a stable aqueous dispersion. The alkyd resin is optionally diluted with a minor amount of an organic solvent of the alcohol type such as a $C_2—C_6$ mono- or diol, e.g. butanol, ethylene glycol, propylene glycol or a half ether thereof in an amount of 0—10%, preferably 0—5% by weight. The solvent, if any, is added after cooling the alkyd to a temperature of 60—150°C, dependent on the nature of the solvent. Whether or not a solvent is used depends, inter alia, on the viscosity of the alkyd.

The alkyd is then dispersed in water, using alkyd and water in weight ratios of 30:70 to 70:30, preferably demineralised water at a temperature of 20—100, preferably 50—90°C in the presence of 0.25—5, preferably 1—3 weight percent of an emulsifying agent and 0.05—5 weight percent of a volatile water-soluble base, preferably an amine.

The exact amount of base added is such that the final pH of the dispersion ranges between 5 and 9.

Preferably the dispersion is prepared by means of a high speed dissolver, such as a Cowless disperser. The emulsifying agent and the amine are previously dissolved in an aqueous phase. The emulsifying agent is preferably of the nonionic or anionic type or a combination thereof. Certain combinations of a nonionic and an anionic yield excellent results. In the case of a nonionic an ethylene oxide addition product of a $C_{12}—C_{20}$ hydroxy or carboxyl compound carrying 2—50, preferably 4—20 ethylene oxide groups in the molecule, is preferably used; in case an anionic is used, an alkali metal $C_{10}—C_{22}$ soap, a sulfosuccinate or an inorganic $C_{10}—C_{22}$ alkyl ether ester such as a polyalkoxysulphate or -phosphate is preferred. The volatile base, in particular water-soluble amino-compound used is

4

preferably a $C_1$—$C_6$ amine or alkanolamine and the amount of amine is so chosen that at least 30 equivalent percent, preferably at least 50 eq.% of the carboxyl groups of the alkyd (as evidenced by its acid value) is neutralized and the final pH of the dispersion ranges between 5 and 9.

By this process a novel aqueous dispersion of an air-drying alkyd in water is obtained containing 30—70% by weight of alkyd and 70—30% by weight of water, preferably 50—70% by weight of alkyd, 50—30% by weight of water, 0.25—5% by weight of emulsifying agent and 0.05—5% by weight of a volatile base. The average particle size of the dispersed alkyd may range between 0.5 and 15 microns. Thus dispersions can be obtained which are generally stable upon storage for at least 6 weeks at 50°C.

In accordance with the present invention the aqueous dispersion of an air-drying alkyd can be successfully used to prepare a water-based paint or like coating composition together with the usual adjuncts and 10—50% by weight based on the emulsion of a pigment. Usual adjuncts are fillers, extenders and drying agents. The stable alkyd emulsion itself is a colourless varnish and a starting material in the preparation of water-based paints.

The pigment fillers, extenders, drying agents and other adjuncts can be added directly to the aqueous dispersion of the alkyd, but it is generally preferred first to prepare a pigment paste and to incorporate this paste into the aqueous dispersion of the alkyd.

If such a pigment paste is to be prepared, a dispersant and/or wetting agent, water and optionally an at least partially water-soluble solvent such as a glycol and a thickening agent/protective colloid are ground together until homogeneous. The pigment content generally ranges between 33 and 66 parts by weight, the solvent content from 0—10 parts by weight and the wetting agent/dispersant from 2—10 parts by weight. In cases where high amounts of pigments (more than 50%, based on the emulsion) are used it may be difficult to obtain a glossy finish.

The pigment paste thus obtained is then dispersed in the aqueous dispersion of the alkyd by means of a high speed disperser or a similar device. The aqueous dispersion of the alkyd may be present in one part by weight to 0.5 to 2 parts by weight of pigment paste, small amounts (a few percents) of one or more defoamers, a thickening agent and a few percent (calculated as free metal) of a drying agent, which is a mixture of metal salts such as cobalt, calcium and lead salts e.g. naphthenates in an organic solvent. Dispersing is continued until a fine dispersion has been obtained.

The water-based air-drying coating composition thus obtained is capable of drying to non-tack in 2—6 hours, yielding a gloss finish, dependent on the pigment content, which is water-resistant and hard.

## Examples 1—7

### A. *Preparation of the modified air-drying alkyds*

A 3-litre, 4 necked reaction vessel equipped with a stirrer, a gas inlet tube, a thermometer and a Dean and Stark apparatus connected to a condensor was charged with drying oil and/or fatty acid, polyol and calcium hydroxide as indicated in Table I and subsequently heated to 250°C under a nitrogen blanket, until alcoholysis was complete (checked by complete solubility of a sample in ethanol). The mixture was then cooled to about 200°C and the acid/anhydride, polyalkylene oxide addition compound (Carbowax 1540) and optionally a polyol and xylene were added.

The contents of the flask were heated to 240—245°C while distilling off the reaction water azeotropically and maintained at this temperature until a sample of the resin had the indicated acid value and viscosity. See Table I.

### B. *Preparation of the emulsions*

The resin obtained as described under A was cooled to 140°C and added over a period of 1.5 h. to an aqueous phase having a temperature in the range from 20°—100°C, which contained the emulsifiers and base as indicated in Table II. Stirring was effected by means of a Cowless-type disperser.

The dispersions thus obtained showed after 24 hours the characteristics as tabulated in Table II.

### C. *Preparation of paints*

In a 1 litre tin the pigment was dispersed in water together with dispersants and a protective colloid.

Subsequently, the alkyd emulsion and the driers were added. If necessary an antifoam agent and/or a thickening agent may be added. The paint composition and the paint properties are listed in Table III.

TABLE I

Resin Composition Examples 1—7 (grams)

| | Raw material | 1 | 2 | 3 | 4 | 5 | 6 | 7 |
|---|---|---|---|---|---|---|---|---|
| Alcoholysis | Soy bean oil | 464 | 1086 | 715 | 1138 | — | — | 1190 |
| | Linseed oil | — | — | 477 | — | 333 | 1515 | — |
| | Safflower oil | 469 | — | — | — | 1000 | — | — |
| | Tall oil fatty acid | — | — | — | 272 | — | — | — |
| | Glycerol | 106 | — | 72 | 30 | 11 | — | 75 |
| | Pentaerythritol | — | 206 | 204 | 193 | 223 | 180 | 200 |
| | Trimethylolpropane | 313 | — | — | — | — | — | — |
| | Calciumhydroxide | 0.1 | 0.1 | 0.1 | 0.1 | 0.1 | 0.1 | 0.1 |
| Esterification | Phthalic anhydride | 663 | 535 | 510 | 196 | 421 | 330 | 510 |
| | Maleic anhydride | — | — | — | — | 14 | — | — |
| | Isophthalic acid | — | — | — | 217 | — | — | — |
| | Trimethylolpropane | — | 146 | — | — | — | — | — |
| | Carbowax 1540 | 60 | 39 | 39 | 40 | 40 | 41 | 40 |
| | Xylene | 40 | 40 | 40 | 40 | 40 | 40 | 40* |
| Properties | Acid value (mg KOH/g) | 9.4 | 12.3 | 8.4 | 8.0 | 8.8 | 9.0 | 6.6 |
| | Hydroxyl value (mg KOH/g) | 44.6 | 60.9 | 41.5 | 12.2 | 23.9 | 22.8 | 42.1 |
| | Viscosity, mPaS, 70% in White Spirit, 20°C/Emila | 3200 | 9200 | 6000 | 250 | 7000 | 80 | 3500 |

* + 150 g styrene

TABLE II
(Examples E—1a—E7) — Emulsion compositions in grams

| | E—1a | E—1b | E—2 | E—3a | E—3b | E—3c | E—4 | E—5 | E—6 | E—7 |
|---|---|---|---|---|---|---|---|---|---|---|
| Water | 390 | 390 | 390 | 390 | 390 | 390 | 390 | 390 | 390 | 320 |
| Triethylamine | | | | | | | 7 | 7 | | |
| Dimethylethylamine | 4 | 4 | 4 | 4 | | 3 | | | 5 | 3 |
| Ammonia | | | | | 5 | | | | | |
| AMP—90 (1) | | 5 | | | | | | | | |
| NNP—4 (2) | | | | | | | | | 4 | |
| NNP—20 (2) | 7.5 | | 10 | 10 | 10 | | 7 | 7 | 7 | 7 |
| NNP—30 (3) | | | | | | | | 3 | | |
| APEP— (3) | 2.5 | | | | | | | | | 3 |
| Fatty alcohol EO (4) | | 10 | | | | | | | | |
| Fatty acid EO (5) | | | | | | | 3 | | | |
| EO-homopolymer (6) | | 3 | | 3 | | | | 3 | | |
| Sulfosuccinate (7) | | | | | | | 1.2 | | | |
| Polyvinylalcohol (8) | | | 3 | | 3 | | 3 | | 4 | |
| Alkyd resin 1 | 500 | 500 | | | | | | | | |
| ,, 2 | | | 500 | | | | | | | |
| ,, 3 | | | | 500 | 500 | 500 | | | | |
| ,, 4 | | | | | | | 500 | | | |
| ,, 5 | | | | | | | | 500 | | |
| ,, 6 | | | | | | | | | 500 | |
| ,, 7 | | | | | | | | | | 500 |

0 000 087

TABLE II (Continued)

| | E—1a | E—1b | E—2 | E—3a | E—3b | E—3c | E—4 | E—5 | E—6 | E—7 |
|---|---|---|---|---|---|---|---|---|---|---|
| pH of emulsion | 6.5 | 7.0 | 6.4 | 5.9 | 7.1 | 6.4 | 6.4 | 5.4 | 5.9 | 5.7 |
| Viscosity 23°C mPaS (9) | 3070 | 3080 | 530 | 9 | 2000 | 110 | 1320 | 340 | 310 | 790 |
| Solids content % (ww) | 54.5 | 55.7 | 54.6 | 55.2 | 55.6 | 55.2 | 55.0 | 55.6 | 60.4 | 58.2 |

(1)  2-methyl-2 aminopropanol-1 90% in water

(2)  ethoxylated nonyl phenols with different percentages EO, Antarox ex General Anilin & Film Corp.

(3)  alkylphenol ether phosphate Servoxyl—VPNZ 4/10 ex Servo B.V.

(4)  ethyleneoxide addition product of fatty alcohols Mulgophen ON—870 ex General Anilin & Film Corp.

(5)  ethyleneoxide addition product of fatty acids Servirox OEG 55 ex Servo B.V.

(6)  ethyleneoxide homopolymer of high molecular weight ex Union Carbide Co.

(7)  sulfosuccinate Aerosol—501 Ex American Cyanamid Co.

(8)  polyvinyl alcohol ester value 140, acetyl value 10.7 ex Hoechst.

(9)  determined with Rheomat, Cup C, position 15.

TABLE III
Paint composition Examples 1a–7

| | P–1a | P–1b | P–2 | P–3a | P–3b | P–3c | P–4 | P–5 | P–6 | P–7 |
|---|---|---|---|---|---|---|---|---|---|---|
| Calgon S (1) | 10 | 10 | 10 | 10 | 10 | 10 | 10 | 10 | 10 | 10 |
| Borchiset WL (2) | 3 | 3 | 3 | 3 | 3 | 3 | 3 | 3 | 3 | 3 |
| Collacral VL (3) | 74 | 74 | 74 | 74 | 74 | 74 | 74 | 74 | 74 | 74 |
| Water | 39 | 39 | 39 | 39 | 39 | 39 | 39 | 39 | 39 | 39 |
| Titanium dioxide (4) | 227 | 227 | 227 | 227 | 227 | 227 | 227 | 227 | 227 | 227 |
| Nopco NXZ (5) | 1 | 1 | 1 | 1 | 1 | 1 | 1 | 1 | 1 | 1 |
| Emulsion E–1a | 648 | | | | | | | | | |
| Emulsion E–1b | | 648 | | | | | | | | |
| Emulsion E–2 | | | 648 | | | | | | | |
| Emulsion E–3a | | | | 648 | | | | | | |
| Emulsion E–3b | | | | | 648 | | | | | |
| Emulsion E–3c | | | | | | 648 | | | | |
| Emulsion E–4 | | | | | | | 648 | | | |
| Emulsion E–5 | | | | | | | | 648 | | |
| Emulsion E–6 | | | | | | | | | 594 | |
| Emulsion E–7 | | | | | | | | | | 648 |
| Aqua Trockner 123 (6) | 15 | 15 | 15 | 15 | 15 | 15 | 15 | 15 | 15 | 15 |
| Borchigel L75 (7) | 37 | 37 | 37 | 37 | 37 | 37 | 37 | 37 | 37 | 37 |
| Gloss (Gardner 20°) | 72 | 71 | 70 | 78 | 76 | 72 | 75 | 15 | 73 | 77 |
| Sand-dry time (hrs) | 5.0 | 5.0 | 3.5 | 3.0 | 3.5 | 3.0 | 6 | 4.5 | 4.0 | 3.0 |
| Water resistance | o.k. | o.k. | o.k. | o.k. | o.k. | o.k. | o.k. | o.k. | o.k. | o.k. |

0 0000087

Legend :

(1)   Sodiumpolymetaphosphate 5% in water

(2)   Trialkylphosphate (ex Borchers)

(3)   N-vinyl-pyrrolidone copolymer (ex BASF)

(4)   Kronos RN—59

(5)   Foam depressant (silicon-free)

(6)   1.2% Co, 7.2% Ba, 3.2% Zn salt (as octanoates) (ex Borchers)

(7)   nonionic thickening agent based on polyurethane ; 50% in water (ex Borchers)


## Claims

1. An aqueous dispersion of an air-drying alkyd containing alkylene oxide groups, characterised in that the alkyd contain 1.5—2.75% of alkylene oxide radicals and has an acid value of 5—20 mg KOH/g and a hydroxyl value of 5—125 mg KOH/g, the weight ratio of alkyd to water being from 30:70 to 70:30; in the presence of a nonionic emulsifying agent in an amount of 0.25—5% by weight based on the dispersion; a $C_2$—$C_6$ alcohol in an amount of 0—10% by weight; and a volatile water-soluble base in an amount of 0.05—5% by weight, with the proviso that the pH of the dispersion ranges between 5 and 9.

2. A dispersion as claimed in claim 1, characterised in that the alkyd has an acid value of 7—14 mg KOH/g and a hydroxyl value of 10—75 mg KOH /g.

3. A dispersion according to claim 1 or 2, characterised in that the emulsifying agent is the ethylene oxide addition product of a $C_{12}$—$C_{20}$ hydroxyl or carboxyl compound having an average of 2—50 ethylene oxide groups in the molecule.

4. A dispersion according to claim 1, 2 or 3, characterised in that the base is a water-soluble volatile amino compound.

5. Use of an aqueous dispersion as a water-based paint, characterised in that the dispersion is a dispersion as claimed in claim 1,2,3, or 4, together with the usual adjuncts and 10—50% by weight based on the emulsion of a pigment.


## Revendications

1. Dispersion aqueuse d'une résine alkyde séchant à l'air qui contient des radicaux oxyde d'alkylène, caractérisée en ce que la résine alkyde contient 1,5 à 2,75% de radicaux oxyde d'alkylène et a un indice d'acide de 5 à 20 mg KOH/g et un indice d'hydroxyle de 5 à 125 mg KOH/g, le rapport pondéral de la résine alkyde à l'eau étant de 30:70 à 70:30, en présence d'un agent émulsionnant non ionique en une quantité de 0,25 à 5% en poids, sur base de la dispersion; un alcool en $C_2$—$C_6$ en une quantité de 0 à 10% en poids; et une base hydrosoluble volatile en une quantité de 0,05 à 5% en poids, avec la restriction que le pH de la dispersion s'échelonne entre 5 et 9.

2. Dispersion suivant la revendication 1, caractérisée en ce que la résine alkyde a un indice d'acide de 7 à 14 mg KOH/g et un indice d'hydroxyle de 10 à 75 mg KOH/g.

3. Dispersion suivant la revendication 1 ou 2, caractérisée en ce que l'agent émulsionnant est le produit d'addition de l'oxyde d'éthylène sur un composé hydroxylé ou carboxylé en $C_{12}$—$C_{20}$ contenant, en moyenne, 2 à 50 radicaux oxyde d'éthylène par molécule.

4. Dispersion suivant la revendication 1, 2 ou 3, caractérisée en ce que la base est un composé aminé volatil hydrosoluble.

5. Utilisation d'une dispersion aqueuse comme peinture à base aqueuse, charactérisée en ce que la dispersion est une dispersion suivant la revendication 1, 2, 3 ou 4, augmentée des additifs habituels et de 10 à 50% en poids d'un pigment, sur base de l'émulsion.


## Patentansprüche

1. Wäßrige Dispersion eines lufttrocknenden Alkyds mit einem Gehalt an Alkylenoxidgruppen, dadurch gekennzeichnet, daß das Alkyd 1,5 bis 2,75% Alkylenoxidreste enthält und eine Säurezahl von 5 bis 20 mg KOH/g und eine Hydroxylzahl von 5 bis 125 mg KOH/g aufweist, wobei das Gewichtsverhältnis von Alkyd zu Wasser im Bereich von 30:70 bis 70:30 liegt; in Gegenwart eines nichtionischen Emulgiermittels in einer Menge von 0,25 bis 5 Gew.%, bezogen auf die Dispersion, eines $C_2$—$C_6$-Alkohols in einer Menge von 0 bis 10 Gew.% und einer flüchtigen wasserlöslichen Base in einer

## 0 000 087

Menge von 0,05 bis 5 Gew.%, mit der Maßgabe, daß der pH-Wert der Dispersion im Bereich zwischen 5 und 9 liegt.

2. Dispersion nach Anspruch 1, dadurch gekennzeichnet, daß das Alkyd eine Säurezahl von 7 bis 14 mg KOH/g und eine Hydroxylzahl von 10 bis 75 mg KOH/g aufweist.

3. Dispersion nach Anspruch 1 oder 2, dadurch gekennzeichnet, daß das Emulgiermittel aus einem Äthylenoxidadditionsprodukt von einer $C_{12}$—$C_{20}$-Hydroxyl- oder Carboxylverbindung mit einem durchschnittlichen Gehalt von Äthylenoxidgruppen im Molekül von 2 bis 50 besteht.

4. Dispersion nach Anspruch 1, 2 oder 3, dadurch gekennzeichnet, daß die Base aus einer wasserlöslichen flüchtigen Aminoverbindung besteht.

5. Verwendung einer wäßrigen Dispersion als Anstrich auf Wasserbasis, dadurch gekennzeichnet, daß die Dispersion eine Dispersion gemäß den Ansprüchen 1, 2, 3 oder 4 ist, zusammen mit den üblichen Hilfsmitteln und 10 bis 50 Gew.%, bezogen auf die Emulsion, eines Pigmentes.